# EUROPEAN PATENT SPECIFICATION

(11) **EP 3 327 880 B1**
(45) Date of publication and mention of the grant of the patent: **11.09.2019**
(21) Application number: 15898635.6
(22) Date of filing: 22.07.2015
(51) Int. Cl.: H01S 3/23, H01S 3/07, H01S 3/083, H01S 3/225, H01S 3/00

(54) **EXCIMER LASER SYSTEM WITH ANNULAR CHAMBER STRUCTURE**
EXCIMERLASERSYSTEM MIT RINGFÖRMIGER KAMMERSTRUKTUR
SYSTÈME LASER À EXCIMÈRE À STRUCTURE DE CHAMBRE ANNULAIRE

(43) Date of publication of application: 30.05.2018
(73) Proprietor: Academy of Opto-Electronics Chinese Academy of Sciences, Beijing 100094 (CN)
(72) Inventor: WANG, Yu, Beijing 100094 (CN); ZHOU, Yi, Beijing 100094 (CN); SONG, Xingliang, Beijing 100094 (CN); SHA, Pengfei, Beijing 100094 (CN); FAN, Yuanyuan, Beijing 100094 (CN); ZHAO, Jiangshan, Beijing 100094 (CN); SHI, Haiyan, Beijing 100094 (CN); LI, Hui, Beijing 100094 (CN); DING, Jinbin, Beijing 100094 (CN); SHAN, Yaoying, Beijing 100094 (CN); WANG, Qian, Beijing 100094 (CN); CAI, Qianwei, Beijing 100094 (CN); PENG, Zhuojun, Beijing 100094 (CN)
(74) Representative: Witte, Weller & Partner Patentanwälte mbB
(86) International application number: PCT/CN2015/084740
(87) International publication number: WO 2017/012079

(56) References cited:
- CN-A- 102 810 810
- CN-A- 103 199 422
- CN-A- 103 296 572
- CN-A- 104 993 364
- CN-U- 203 193 116
- CN-U- 204 947 314
- JP-A- 2009 277 977
- JP-B2- 4 907 865
- US-A- 4 499 582
- US-A1- 2008 095 209
- US-A1- 2008 144 671
- US-A1- 2010 074 295
- US-A1- 2011 069 733
- US-A1- 2014 023 101

## Description

### TECHNICAL FIELD

The present disclosure relates to the field of gas lasers, in particular, to an excimer laser and its applications, and more particularly, to an excimer laser system with a ring cavity structure.

### BACKGROUND

With an increasing requirement on output power and line width of light sources in lithography industry, quasi-molecular devices with a single cavity structure cannot achieve an output with a high-level power and with a high-level line width simultaneously. A dual-cavity master oscillator-amplification technique is introduced to solve a confliction between the output power and the line width. Its basic idea is to use a seed cavity to produce a seed light with a narrow line width and a small energy, and then inject the seed light into an amplification cavity to obtain a high power, thereby achieving a high-quality laser output with a narrow line width and a high power.

At present, related amplification mechanisms mainly include: MOPA, MOPO (Gigaphoton), MOPRA (Cymer), MORRA (Lambda Physik) and so on. XLA100 series (2002 market) from Cymer firstly introduces MOPA mechanism into the light source in lithography industry, thereby obtaining a higher efficiency and better output index than the single cavity structure. However, the output from the power amplifier chamber (power amplifier chamber PA) in the MOPA structure is easily affected by the synchronous jitter of the master oscillator chamber (MO chamber) and the power amplifier chamber PA, resulting in an unstable laser output. At this time, the ring cavity technology is introduced into the dual-cavity structure. Compared with the MOPA technology, in the ring cavity structure, the seed light is injected into the amplification chamber, so as to be multi-path amplified to a deeper saturation gain state, so that the output energy is more stable. The controllability of the output beam is increased, since the quality of the output beam is modulated by the amplification chamber.

However, when a seed light with a certain pulse width is injected into the amplification cavity, the amplification times are limited by the length of the amplification cavity. In particular, the amplification times N = c • Δt / L, wherein L indicates for the length of the ring cavity, c is the speed of light, and Δt indicates for the pulse width. The longer the L, the smaller the amplification times will be. Therefore, the amplification times N can be increased by reducing the length of the ring cavity, thereby obtaining a more stable laser output.

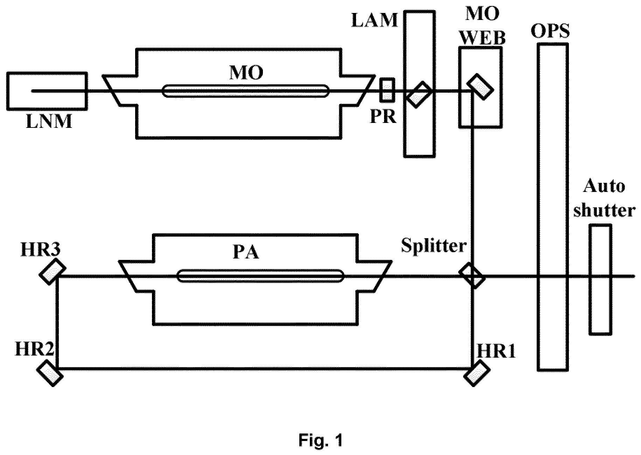

A typical MORRA ring cavity structure is shown in FIG. 1. The laser system includes: a master oscillator chamber (MO), a power amplifier chamber (PA), a line width narrowing module (LNM), a line width analysis module (LAM), a master oscillator wavefront engineering box (MO WEB), an optical pulse stretcher (OPS), an auto shutter, a partial reflectance mirror (PR), a beam splitting system (Splitter), a first high reflectance mirror (HR1), a second high reflectance mirror (HR2) and a third high reflectance mirror (HR3). The master oscillator chamber MO may generate laser pulses with a narrowed line width and a small energy by means of the line width narrowing module LNM, as a seed light, which is refracted by the master oscillator wavefront engineering box MO WEB and then incident into the power amplifier chamber PA through the beam splitting system. Three high reflectance mirror HR1, HR2, HR3, each of which has an incident angle of 45°, act as mirrors of the power amplifier chamber PA, so as to form a multi-path amplification system for the seed light along with the beam splitting system Splitter. The ring amplification optical path structure of the system may be in a form of a quadrilateral, in which only one side of the discharging cavity has an effect of amplifying the power of the seed light, and the other three sides are arranged outside the discharging cavity. Due to the size of the discharging cavity, the length of the ring cavity cannot be further reduced, resulting in a low amplification times. Thus, the benefits of multi-path amplification of the ring cavity cannot be well applied.

US 2008/0144671 A1 discloses a line narrowed pulsed excimer gas discharge laser system comprising a seed laser oscillator producing an output comprising a laser output light beam of pulses which may comprise a first gas discharge excimer laser chamber, a line narrowing module within a first oscillator cavity, a laser amplification stage containing an amplifying gain medium in a second gas discharge excimer laser chamber receiving the output of the seed laser oscillator and amplifying the output of the seed laser oscillator to form a laser system output comprising a laser output light beam of pulses, which may comprise a ring power amplification stage.

US 2011/0069733 A1 discloses a laser including a discharge chamber having electrodes and a gain medium between the electrodes for producing a laser beam, a partially-reflective optical coupler, and a beam modification optical system in the path of the laser beam.

US 2008/0095209 A1 discloses a laser comprising an oscillation stage laser and an amplification stage laser.

JP 2009 277977 A discloses an implantation synchronous type discharge-excited pump laser device comprising a narrow-band oscillation stage laser and an amplification stage laser where the resonator is arranged.

US 2010/0074295 A1 discloses a pulsed gas discharge laser source comprising a seed laser portion and an amplifier portion receiving the seed laser output light beam and amplifying the optical intensity of each seed pulse to provide a high power laser system output light beam of output pulses.

US 2014/0023101 A1 discloses a single-cavity dual-electrode discharge cavity and an excimer laser including such a discharge cavity. A single-cavity configuration having two pairs of Brewster windows can be used to achieve functions of dual-cavity configurations, such as MOPA, MOPO, and MOPRA.

US 4 499 582 A discloses a laser system comprising a discharge chamber having a first pair of Brewster windows located in a laser oscillator beam path channel and having a second pair of Brewster windows located in a series connected parallel amplifier beam path channel.

### SUMMARY

The present disclosure is aimed to solve/relief the problem that the benefits of a deep gain saturation effect achieved by multi-pass amplification via a ring cavity structure of an excimer laser cannot be fully utilized, since the length of the ring cavity structure cannot be reduced without limit due to its physical size.

In order to solve the above technical problem, the present disclosure provides an excimer laser system, comprising: a master oscillator chamber, a power amplifier chamber, a line width narrowing module, a line width analysis module, a master oscillator wavefront engineering box, an optical pulse stretcher, an auto shutter, a partial reflectance mirror, a beam splitting system, a first high reflectance mirror, a second high reflectance mirror, and a third high reflectance mirror,
the master oscillator chamber may generate laser pulses with a narrowed line width and a small energy by means of the line width narrowing module, as a seed light, which is refracted by the master oscillator wavefront engineering box and then incident into the power amplifier chamber through the beam splitting system,
the beam splitting system, the first high reflectance mirror, the second high reflectance mirror and the third high reflectance mirror constitute a quadrilateral annular optical path,
the power amplifier chamber has a first pair of Brewster windows and a second pair of Brewster windows, wherein the first pair of Brewster windows is located in a first amplification optical path of the annular optical path along with a discharging electrode of the power amplifier chamber, and the second pair of Brewster windows is located in a second optical path of the annular optical path which is parallel to the first amplification optical path.

According to an embodiment of the present disclosure, the power amplifier chamber has two parallel discharging electrodes, and the first optical path and the second optical path in the annular optical path pass through the two discharging electrodes, respectively.

According to an embodiment of the present disclosure, each of the first high reflectance mirror, the second high reflectance mirror and the third high reflectance mirror is a reflectance mirror with an angle of 45°.

The present disclosure may further reduce the length of a ring cavity of an excimer laser system with a ring cavity structure, increasing the amplification times and achieving a deeper gain saturation amplification than a traditional structure, thereby improving the output characteristic of the excimer laser system.

### BRIEF DESCRIPTION OF THE DRAWINGS

Fig. 1 is a schematic diagram illustrating a structure of an excimer laser system with a dual-cavity MORRA structure in prior art;
Fig. 2 is a schematic diagram illustrating a structure of an excimer laser system with a dual-electrode dual-cavity MORRA structure according to an embodiment of the present disclosure; and
Fig. 3 is a schematic diagram illustrating a structure of an excimer laser system with a single-electrode dual-cavity MORRA structure according to another embodiment of the present disclosure.

### DETAILED DESCRIPTION

In view of the problem that the ring cavity length of the excimer laser cannot be reduced without limit due to its physical size, the present disclosure proposes a design of disposing the entire ring structure inside the power amplifier chamber, rather than disposing a part of the ring cavity outside the chamber as the prior art, which can reduce the cavity length of the ring structure and increasing the amplification times, thereby further enhancing the stability of the output.

The present disclosure positions the part outside the ring cavity of a traditional excimer laser into the amplification chamber, reducing the length of the ring cavity significantly. Since the amplification times N = c • Δt / L, wherein L indicates for the length of the ring cavity, c is the speed of light, and Δt indicates for the pulse width. A decrease of L can lead to an increase of the amplification times N. Therefore, the amplification times N can be increased by reducing the length of the ring cavity, thereby obtaining a more stable laser output. At the same time, positioning the annular optical path into the amplification chamber can reduce adverse effects of external instable factors on beam propagation.

To make the objectives, solutions, and advantages of the present disclosure clearer, the present disclosure is further described in detail below with reference to specific embodiments in combination with the accompanying drawings.

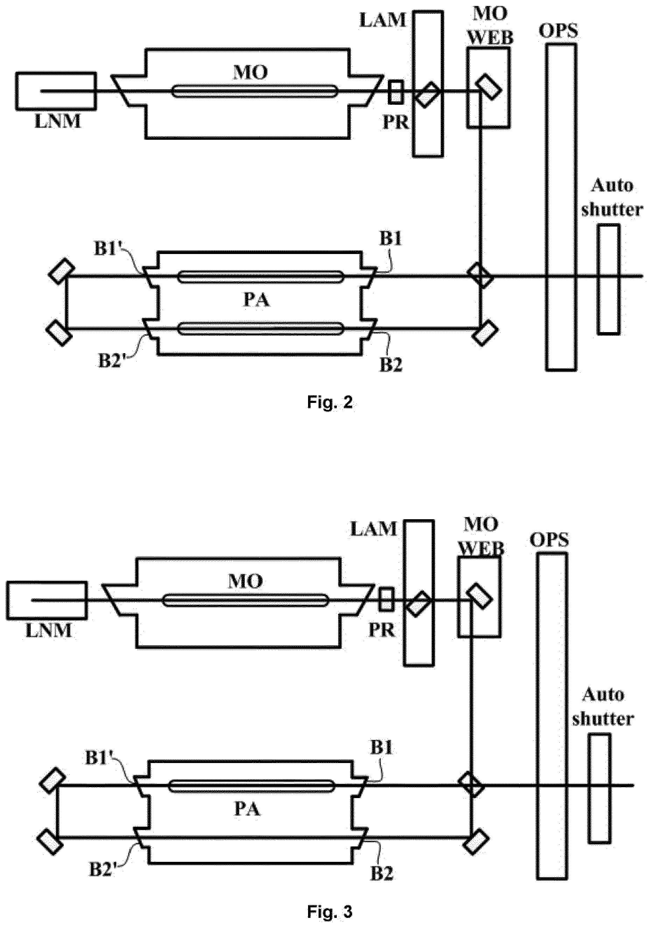

Fig. 2 is a schematic diagram illustrating a structure of an excimer laser system with a dual-electrode dual-cavity MORRA structure according to an embodiment of the present disclosure. As shown in Fig. 2, the laser system may comprise a master oscillator chamber MO, a power amplifier chamber PA, a line width narrowing module LNM, a line width analysis module LAM, a master oscillator wavefront engineering box MO WEB, an optical pulse stretcher OPS, an auto shutter Auto Shutter and a beam splitting system Splitter.

The master oscillator chamber MO may generate laser pulses with a narrowed line width and a small energy by means of the line width narrowing module LNM, as a seed light, which is refracted by the master oscillator wavefront engineering box MO WEB and then incident into the power amplifier chamber PA through the beam splitting system Splitter. Three high reflectance mirror HR1, HR2, HR3, each of which has an incident angle of 45°, act as mirrors of the power amplifier chamber PA, so as to form a multi-path amplification system for the seed light along with the beam splitting system Splitter. The beam splitting system (Splitter), the first high reflectance mirror (HR1), the second high reflectance mirror (HR2) and the third high reflectance mirror (HR3) constitute a quadrilateral annular optical path. That is, the ring amplification optical path structure of the system may be in a form of a quadrilateral, in which the optical path between discharging electrodes of the discharging cavity may have an effect of amplifying on the seed light.

In contrast to the structure as shown in Fig. 1, the power amplifier cavity PA according to this embodiment has two pairs of Brewster windows (upper and lower). Herein, the two Brewster windows in the same optical path with the discharging electrode are referred to as a first pair of Brewster windows (indicated by B1, B1'), and the other two Brewster windows located on another optical path within the discharge cavity which is in parallel with the amplification optical path are referred to as a second pair of Brewster windows (indicated by B2, B2').

The first pair of Brewster windows (B1, B1') is located in a first optical path of the annular optical path along with a discharging electrode of the power amplifier chamber PA, and the second pair of Brewster windows (B2, B2') is located in a second optical path of annular optical path which is parallel to a first amplification optical path.

As shown in Fig. 2, the laser light emitted from one Brewster window B1' of the first pair of Brewster windows B1, B1' is incident into the Brewster window B2' of the second pair of Brewster windows B2, B2' after being reflected by the second and third high reflectance mirrors HR2, HR3, so as to emit into the power amplifier chamber PA, wherein the Brewster window B2' is located on the same side of the power amplifier chamber PA as the Brewster window B1'. Then, the light is emitted from the other Brewster window B2 of the second pair of Brewster windows B2, B2'. In addition, compared with the conventional structure, the power amplifier chamber PA having two pairs of Brewster windows shown in Fig. 2 can improve the polarization degree of the P light, so as to obtain a laser light with more superior laser polarization characteristics. Since the optical path parallel to the discharging optical path is disposed in the discharging cavity, the remaining two optical paths perpendicular to the discharging optical path are no longer limited by the size of the discharging cavity, thereby reducing the length of the annular amplification chamber.

In the structure according to this embodiment, the amplification chamber is a dual-electrode structure. Compared with the conventional dual-cavity MORRA structure, the length of the ring cavity can be effectively reduced, which is beneficial for multi-path amplification to achieve a deep-gain saturation amplification. Compared with the conventional structure, an output with more stable index can be obtained.

Fig. 3 is a schematic diagram illustrating a structure of an excimer laser system with a single-electrode dual-cavity MORRA structure according to another embodiment of the present disclosure.

Different from the embodiment as shown in Fig. 3, the power amplifier chamber PA in Fig. 2 may have two parallel discharging electrodes. The first optical path and the second optical path of the annular optical path may both have an amplification effect on the seed light through the two discharging electrodes. It can be seen that in this embodiment, not only the length of the ring cavity is effectively reduced, but also the magnification is twice as that of the single electrode. That is, if the same seed light is injected into the amplification cavities discussed above, the structure according to this embodiment may output with a higher energy. In addition, the increase of magnification times enables the amplification occur in a state of deeper gain saturation, which makes the output beam obtained by this structure more stable.

In summary, the present disclosure is directed to an improvement on a power amplification mechanism in a ring cavity of an excimer laser system in terms of its structure and performance. Through a design of single (dual)-electrode structure, the low amplification due to the limit of cavity length can be solved, which may further improve the efficiency for gain utilization in the cavity, thereby ensuring an effective output of the system. The present disclosure is intended to increase the amplification capability by means of multi-path cavity transition. Meanwhile, the ring cavity structure may also reduce the influence of external unfavorable factors, such as passing through the atmosphere.

The above specific embodiments are used to further describe the objectives, technical solutions and advantages of the present disclosure in detail. It should be understood that the above description is only specific embodiments of the present disclosure and not intended to limit the present disclosure. The scope of the present invention is defined by the claims.

## Claims

1. An excimer laser system, comprising: a master oscillator chamber (MO), a power amplifier chamber (PA), a line width narrowing module (LNM), a line width analysis module (LAM), a master oscillator wavefront engineering box (MO WEB), an optical pulse stretcher (OPS), an auto shutter, a partial reflectance mirror (PR), a beam splitting system (Splitter), a first high reflectance mirror (HR1), a second high reflectance mirror (HR2) and a third high reflectance mirror (HR3),
the master oscillator chamber (MO) generates laser pulses with a narrowed line width and a small energy by means of the line width narrowing module (LNM) as a seed light, wherein the seed light is refracted by the master oscillator wavefront engineering box (MO WEB) and then injected into the power amplifier chamber (PA) through the beam splitting system (Splitter),
the beam splitting system (Splitter), the first high reflectance mirror (HR1), the second high reflectance mirror (HR2) and the third high reflectance mirror (HR3) constitute a quadrilateral annular optical path,
the power amplifier chamber (PA) has a first pair of Brewster windows (B1, B1') and a second pair of Brewster windows (B2, B2'), wherein the first pair of Brewster windows (B1, B1') is located in a first amplification optical path of the annular optical path along with a discharging electrode of the power amplifier chamber (PA), and the second pair of Brewster windows (B2, B2') is located in a second optical path of the annular optical path which is parallel to the first amplification optical path.

2. The excimer laser system of claim 1, wherein the power amplifier chamber (PA) has two parallel discharging electrodes, and the first optical path and the second optical path in the annular optical path pass through the two discharging electrodes, respectively.

3. The excimer laser system of claim 1, wherein each of the first high reflectance mirror (HR1), the second high reflectance mirror (HR2) and the third high reflectance mirror (HR3) is a reflectance mirror with an angle of 45°.

4. The excimer laser system of claim 2, wherein each of the first high reflectance mirror (HR1), the second high reflectance mirror (HR2) and the third high reflectance mirror (HR3) is a reflectance mirror with an angle of 45°.

## Patentansprüche

1. Excimer-Lasersystem, mit: einer Masteroszillator-Kammer (MO), einer Leistungsverstärker-Kammer (PA), einem Linienbreiten-Einengungsmodul (LNM), einem Linienbreiten-Analysemodul (LAM), einer Masteroszillator-Wellenfront-Engineeringbox (MO WEB), einem optischen Pulsstretcher (OPS), einem Auto-Verschluss, einem teilreflektierenden Spiegel (PR), einem Strahlteilersystem (Splitter), einem ersten hoch-reflektierenden Spiegel (HR1), einem zweiten hoch-reflektierenden Spiegel (HR2), und einem dritten hoch-reflektierenden Spiegel (HR3),
wobei die Masteroszillator-Kammer (MO) Laserpulse mit einer eingeengten Linienbreite und kleiner Energie mittels des Linienbreiten-Einengungsmoduls (LNM) als Saatlicht erzeugt, wobei das Saatlicht durch die Masteroszillator-Wellenfront-Engineeringbox (MO WEB) abgelenkt und dann in die Leistungsverstärkungs-Kammer (PA) durch das Strahlteilersystem (Splitter) injiziert wird,
wobei das Strahlteilersystem (Splitter), der erste hoch-reflektierende Spiegel (HR1), der zweite hoch-reflektierende Spiegel (HR2) und der dritte hoch-reflektierende Spiegel (HR3) einen viereckigen optischen Ringpfad bilden,
wobei die Leistungsverstärker-Kammer (PA) ein erstes Paar Brewster-Fenster (B1, B1') und ein zweites Paar Brewster-Fenster (B2, B2') aufweist, wobei das erste Paar Brewster-Fenster (B1, B1') zusammen mit einer Entladungs-Elektrode der Leistungsverstärker-Kammer (PA) in einem ersten optischen Verstärkungspfad des optischen Ringpfades angeordnet ist, und das zweite Paar Brewster-Fenster (B2, B2') in einem zweiten optischen Pfad des optischen Ringpfades angeordnet ist, der parallel zu dem ersten optischen Verstärkungspfad verläuft.

2. Excimer-Lasersystem nach Anspruch 1, wobei die Leistungsverstärker-Kammer (PA) zwei parallele Entladungselektroden aufweist, und der erste optische Pfad und der zweite optische Pfad in dem optischen Ringpfad jeweils durch die beiden Entladungselektroden hindurchgehen.

3. Excimer-Lasersystem nach Anspruch 1, wobei jeder des ersten hoch-reflektierenden Spiegels (HR1), des zweiten hoch-reflektierenden Spiegels (HR2) und des dritten hoch-reflektierenden Spiegels (HR3) ein reflektierender Spiegel mit einem Winkel von 45° ist.

4. Excimer-Lasersystem nach Anspruch 2, wobei jeder des ersten hoch-reflektierenden Spiegels (HR1), des zweiten hoch-reflektierenden Spiegels (HR2) und des dritten hoch-reflektierenden Spiegels (HR3) ein reflektierender Spiegel mit einem Winkel von 45° ist.

## Revendications

1. Système laser à excimère, comprenant : une chambre d'oscillateur maître (MO), une chambre d'amplificateur de puissance (PA), un module de réduction de largeur de raie (LNM), un module d'analyse de largeur de raie (LAM), un boîtier d'ingénierie de front d'onde d'oscillateur maître (MO WEB), un dispositif optique d'étalement d'impulsions (OPS), un obturateur automatique, un miroir à réflectance partielle (PR), un système de division de faisceau (Diviseur), un premier miroir à haute réflectance (HR1), un deuxième miroir à haute réflectance (HR2) et un troisième miroir à haute réflectance (HR3),
la chambre d'oscillateur maître (MO) génère des impulsions laser avec une largeur de raie réduite et une faible énergie au moyen du module de réduction de largeur de raie (LNM) en tant que lumière source, où la lumière source est réfractée par le boîtier d'ingénierie de front d'onde d'oscillateur maître (MO WEB) et ensuite injectée dans la chambre d'amplificateur de puissance (PA) à travers le système de division de faisceau (Diviseur),
le système de division de faisceau (Diviseur), le premier miroir à haute réflectance (HR1), le deuxième miroir à haute réflectance (HR2) et le troisième miroir à haute réflectance (HR3) constituent un chemin optique annulaire quadrilatéral,
la chambre d'amplificateur de puissance (PA) a une première paire de fenêtres de Brewster (B1, B1') et une deuxième paire de fenêtres de Brewster (B2, B2'), où la première paire de fenêtres de Brewster (B1, B1') est située dans un premier chemin optique d'amplification du chemin optique annulaire avec une électrode de décharge de la chambre d'amplificateur de puissance (PA), et la deuxième paire de fenêtres de Brewster (B2, B2') est située dans un deuxième chemin optique du chemin optique annulaire qui est parallèle au premier chemin optique d'amplification.

2. Système laser à excimère de la revendication 1, dans lequel la chambre d'amplificateur de puissance (PA) a deux électrodes de décharge parallèles, et le premier chemin optique et le deuxième chemin optique dans le chemin optique annulaire passent à travers les deux électrodes de décharge, respectivement.

3. Système laser à excimère de la revendication 1, dans lequel chacun du premier miroir à haute réflectance (HR1), du deuxième miroir à haute réflectance (HR2) et du troisième miroir à haute réflectance (HR3) est un miroir de réflectance avec un angle de 45°.

4. Système laser à excimère de la revendication 2, dans lequel chacun du premier miroir à haute réflectance (HR1), du deuxième miroir à haute réflectance (HR2) et du troisième miroir à haute réflectance (HR3) est un miroir de réflectance avec un angle de 45°.
